(19) Europäisches Patentamt

European Patent Office

Office européen des brevets

(11) **EP 0 891 805 B1**

(12) **EUROPÄISCHE PATENTSCHRIFT**

(45) Veröffentlichungstag und Bekanntmachung des Hinweises auf die Patenterteilung:
**27.08.2003 Patentblatt 2003/35**

(51) Int Cl.$^7$: **B01D 53/50**

(21) Anmeldenummer: **98111841.7**

(22) Anmeldetag: **26.06.1998**

(54) **Verfahren zur Entfernung von Schwefeldioxid aus Rauchgasen**

Process for removing SO2 from exhaust gases

Procédé pour l'élimination de SO2 de gaz de fumée

(84) Benannte Vertragsstaaten:
**DE DK ES GB IT SE**

(30) Priorität: **19.07.1997 DE 19731062**

(43) Veröffentlichungstag der Anmeldung:
**20.01.1999 Patentblatt 1999/03**

(73) Patentinhaber: **Lurgi Energie und Entsorgung GmbH**
**40880 Ratingen (DE)**

(72) Erfinder:
• **Risse, Theo**
**59368 Werne (DE)**

• **Ferrao, Lourenco, Dipl.-Ing.**
**46535 Dinslaken (DE)**

(74) Vertreter: **Albrecht, Rainer Harald, Dr.-Ing. et al**
**Patentanwälte**
**Andrejewski, Honke & Sozien,**
**Postfach 10 02 54**
**45002 Essen (DE)**

(56) Entgegenhaltungen:
**EP-A- 0 005 270**　　**EP-A- 0 778 067**
**DE-A- 3 733 319**

**Beschreibung**

Die Erfindung betrifft ein Verfahren zur Entfernung von Schwefeldioxid aus Rauchgasen, insbesondere aus Kraftwerksabgasen und Abgasen aus Müllverbrennungsanlagen, bei dem

das Rauchgas von unten nach oben durch einen Wäscher mit mindestens einer Waschzone geleitet und im Gegenstrom mit Absorptionsflüssigkeit beaufschlagt wird, die an der Oberseite der Waschzone aufgegeben sowie unterhalb der Waschzone aus dem Wäscher abgezogen wird, und

die Absorptionsflüssigkeit in einem Waschflüssigkeitskreislauf zur Oberseite der Waschzone zurückgeführt wird,

wobei dem Waschflüssigkeitskreislauf Ammoniakwasser zugeführt und aus dem Waschflüssigkeitskreislauf ein Flüssigkeitsstrom abgezweigt sowie einer Oxidationsvorrichtung zugeführt wird, in der in der Flüssigkeit vorhandenes Ammoniumsulfit ($(NH_4)_2SO_3$) und Ammoniumhydrogensulfit ($NH_4HSO_3$) zu Ammoniumsulfat ($(NH_4)_2SO_4$) oxidiert werden.

Bei der Entfernung von Schwefeldioxid aus Rauchgasen durch Gaswäsche mit einer wässrigen Ammoniaklösung als Absorptionsflüssigkeit laufen im wesentlichen folgende Reaktionen ab:

$$SO_2 + NH_3 + H_2O \rightarrow NH_4HSO_3$$

$$NH_4HSO_3 + NH_3 \rightarrow (NH_4)_2SO_3$$

$$(NH_4)_2SO_3 + SO_2 + H_2O \rightarrow 2NH_4HSO_3$$

$$(NH_4)_2SO_3 + ½O_2 \rightarrow (NH_4)_2SO_4$$

Bei dem Verfahren entsteht als verkaufsfähiges Nebenprodukt Ammoniumsulfat, das als Düngemittel verwertet werden kann.

Ein Verfahren mit den eingangs beschriebenen Merkmalen ist aus DE-C 37 33 319 bekannt. An die mittlere Waschzone eines dreistufigen Wäschers ist ein Waschflüssigkeitskreislauf angeschlossen, dem als Absorber Ammoniakwasser sowie zum Ausgleich der Stoffbilanz Wasser zugeführt werden. Aus dem Waschflüssigkeitskreislauf wird ein Teilstrom abgezogen und einer Oxidationsvorrichtung zugeführt. Hier erfolgt die Oxidation zu einer Ammoniumsulfatlösung, die durch Eindampfen und Granulieren zu einem als Düngemittel verkaufsfähigen Produkt weiterverarbeitet wird. In der im Kreislauf geführten Absorptionsflüssigkeit stellt sich eine hohe Konzentration an gelösten Salzen, insbesondere $(NH_4)_2SO_3$ und $NH_4HSO_3$ ein. Die in der Waschzone eingesetzte Absorptionsflüssigkeit besitzt einen hohen $NH_3$-Partialdruck, der die Bildung störender Aerosole begünstigt. Bei dem bekannten Verfahren ist eine dritte Waschzone nachgeschaltet, in der mit einer durch Schwefelsäurezugabe sauer eingestellten Waschflüssigkeit das im Gas vorhandene Ammoniak auf einen zulässigen Grenzwert ausgewaschen wird. Die zusätzliche Waschzone zur Abscheidung von $NH_3$ ist aufwendig. Auch die Vermeidung einer Aerosolbildung ist noch nicht in vollem Umfange zufriedenstellend gelöst.

Bei einem aus EP-A 0 778 067 bekannten Verfahren wird als Absorptionsflüssigkeit Ammoniumsulfatlösung eingesetzt, die aus einem mit Luft begasten Sumpf des Wäschers abgezogen und Düseneinrichtungen am Kopf des Wäschers zugeführt wird. Es wird eine möglichst vollständige Oxidation der Absorptionsflüssigkeit im Wäschersumpf angestrebt. Aus dem Waschflüssigkeitskreislauf wird so viel Absorptionsflüssigkeit ausgeschleust, daß sich der Salzgehalt der Absorptionsflüssigkeit bei etwa 25 bis 40 Gew.-% einstellt. Die Absorption von $SO_2$ durch die bei dem Verfahren eingesetzte Ammoniumsulfatlösung ist unbefriedigend. Eine Waschzone großer Länge ist erforderlich, um $SO_2$ bis auf den zulässigen Grenzwert aus dem Rauchgas zu entfernen. Darüber hinaus wird eine nicht mehr tolerierbare Aerosolbildung festgestellt, wenn der zu reinigende Rauch eine hohe $SO_2$-Konzentration von mehr als 2700 mg/$Nm^3$ aufweist. Ähnliche Verfahren sind aus EP-A 0 212 523 und EP-A 0 620 187 bekannt. Auch bei diesen Verfahren wird als Absorptionsflüssigkeit eine Ammoniumsulfatlösung eingesetzt.

Der Erfindung liegt die Aufgabe zugrunde, das eingangs beschriebene Verfahren so zu verbessern, daß eine wirksame $SO_2$-Abscheidung bei möglichst geringer Aerosolbildung erreicht wird.

Zur Lösung dieser Aufgabe lehrt die Erfindung, daß die an der Oberseite der Waschzone aufgegebene Waschflüssigkeit aus einer Mischung aus

a) Ammoniakwasser,

b) ammoniumsulfithaltiger Waschflüssigkeit, die unterhalb der Waschzone aus dem Wäscher abgezogen und ohne Zwischenbehandlung zurückgeführt wird, und

c) Ammoniumsulfatlösung, die aus der Oxidationsvorrichtung zurückgeführt wird,

besteht, wobei ein Mischungsverhältnis zwischen Ammoniumsulfit ($(NH_4)_2SO_3$) und Ammoniumsulfat ($(NH_4)_2SO_4$) von 15 : 1 bis 3 : 1 eingestellt wird. Vorzugsweise liegt das Ammoniumsulfit/Ammoniumsulfat-Mischungsverhältnis im Bereich zwischen 10 : 1 bis 5 : 1.

Überraschend wurde festgestellt, daß ammoniumsulfithaltige Waschflüssigkeit im Gemisch mit Ammoniakwasser und einer Ammoniumsulfatlösung eine Absorptionsflüssigkeit ergibt, die sich durch ein großes $SO_2$-Absorptionsvermögen auszeichnet und keine Ten-

denz zur Aerosolbildung zeigt. $SO_2$ wird sehr schnell von Ammoniumsulfit, welches in der erfindungsgemäßen Absorptionsflüssigkeit in hoher Konzentration vorliegt, unter Bildung von $NH_4HSO_3$ gebunden. Es bildet sich ein Gleichgewicht zwischen $SO_2$ aus dem Rauchgas, als Ammoniakwasser zugeführtem $NH_3$ und $(NH_4)_2SO_3$. Die Absorption von $SO_2$ durch das erfindungsgemäß eingesetzte Absorptionsmittel verläuft schneller als die Absorption durch Ammoniakwasser allein oder durch ein Gemisch aus Ammoniak und Ammoniumsulfatlösung. Durch die schnellere und effektivere Absorption von $SO_2$ ist es möglich, die Durchflußgeschwindigkeit des Rauchgases zu erhöhen und/oder mit einer kurzen Waschzone zu arbeiten. Mit Hilfe des erfindungsgemäßen Verfahrens können Rauchgase mit hohen Schwefeloxidgehalten gereinigt werden. Es ist möglich, den Aerosolgehalt im gereinigten Rauchgas konstant unter 15 mg/$Nm^3$ und in den meisten Fällen sogar unter 10 mg/$Nm^3$ zu senken. Zum geringen Aerosolbildungspotential der erfindungsgemäß eingesetzten Absorptionsflüssigkeit trägt der Anteil der Ammoniumsulfatlösung bei. Das kann darauf zurückgeführt werden, daß der Ammoniakpartialdruck des Ammoniumsulfates gegenüber Ammoniumsulfit/Ammoniumhydrogensulfit deutlich geringer ist.

Das eingesetzte Ammoniakwasser weist in der Regel einen Ammoniakgehalt zwischen 10 und 30 Gew.-% auf. Es kann direkt vor Ort durch Mischen von Ammoniak mit Wasser gebildet werden, es können aber auch andere handelsübliche Produkte eingesetzt werden. Die Aufgabemenge des Ammoniakwassers wird durch den pH-Wert der Absorptionsflüssigkeit gesteuert. Der pH-Wert kann im Bereich zwischen pH 4,5 und 7 eingestellt werden. Vorzugsweise wird der pH-Wert der Absorptionsflüssigkeit aufgabeseitig zwischen pH 5 und pH 6,5 eingestellt, wobei die Einstellung des pH-Wertes über die Zuführung von Ammoniakwasser erfolgt.

Der Mengenstrom der unter Umgehung der Oxidationsstufe direkt zur Waschzone zurückgeführten ammoniumsulfithaltigen Flüssigkeit wird so eingestellt, daß die auf die Waschzone aufgegebene Absorptionsflüssigkeit eine überstöchiometrische Menge an $(NH_4)_2SO_3$ entsprechend der Reaktionsgleichung

$$(NH_4)_2SO_3 + SO_2 + H_2O \rightarrow 2NH_4HSO_3$$

für die Bindung der mit dem Rauchgas in die Waschzone eingeführten $SO_2$-Menge enthält. Zweckmäßig wird der Mengenstrom der ammoniumsulfithaltigen Waschflüssigkeit so geregelt, daß die Absorptionsflüssigkeit eine Ammoniumsulfitkonzentration enthält, die um ca. 25 % größer ist als die für eine stöchiometrische Umsetzung nach vorgenannter Reaktionsgleichung erforderliche stöchiometrische Menge.

Gemäß einer bevorzugten Ausführung der Erfindung enthält der Wäscher in der Waschzone eine Füllkörperschüttung, die oberseitig von der Absorptionsflüssigkeit berieselt wird. Die Aufgabemenge der Absorptionsflüssigkeit wird nach Maßgabe eines für die Füllkörperschüttung empirischen Wertes festgelegt. Der Flüssigkeitsmengenstrom der aus der Oxidationsvorrichtung in die Waschzone zurückgeführten Ammoniumsulfatlösung ergibt sich aus folgender Massenbilanz der Flüssigkeitsströme:

$$\dot{m}_{OX} = \dot{m} - \dot{m}_{WF} - \dot{m}_{NH3}$$

mit

$\dot{m}_{OX}$: Mengenstrom der aus der Oxidationsvorrichtung zur Waschzone zurückgeführten Ammoniumsulfatlösung

$\dot{m}$: Aufgabemengenstrom der Absorptionsflüssigkeit

$\dot{m}_{WF}$: Mengenstrom der in die Waschzone zurückgeführten ammoniumgulfithaltigen Waschflüssigkeit

$\dot{m}_{NH3}$: Mengenstrom an frisch zugeführtem Ammoniakwasser.

Aus der Oxidationsvorrichtung wird ein Teilstrom der Ammoniumsulfatlösung ausgeschleust. Durch den ausgeschleusten Mengenstrom ist der Salzgehalt der Absorptionsflüssigkeit steuerbar. Vorzugsweise wird so gearbeitet, daß die Ammoniumsulfatlösung mit einer $(NH_4)_2SO_4$-Konzentration von 25 Gew.-% bis 30 Gew.-% aus der Oxidationsvorrichtung abgezogen wird.

Das zu reinigende Rauchgas wird in der Regel durch Verbrennung von Steinkohle, Braunkohle, Petrokoks, Öl, Raffinerierückstände, Müll und ähnlichen Brennstoffen in Kraftwerksanlagen erzeugt. Das Gas hat üblicherweise eine Temperatur von etwa 135 bis 280° C und wird der Anlage über entsprechende Leitungen zugeführt. Bei Eintritt in die Anlage kann das Gas, welches häufig als weitere Schadstoffe Halogenwasserstoffe wie HCL enthält, mit Alkalilauge, z.B. NaOH oder K0H im Gleichstrom berieselt werden, um die Halogenwasserstoffe zu neutralisieren. Gemäß einer bevorzugten Ausführungsform der Erfindung wird das Rauchgas vor Eintritt in die Waschzone durch Einsprühen von Quenchwasser und/oder Ammoniumsulfatlösung gekühlt und dabei gleichzeitig mit Wasser gesättigt.

In einer weiteren bevorzugten Ausgestaltung des erfindungsgemäßen Verfahrens ist vorgesehen, daß die Absorptionsflüssigkeit auf einem gasdurchlässigen Boden unterhalb der Waschzone aus dem Wäscher abgezogen wird und daß die zum Quenchen eingesetzte Ammoniumsulfatlösung im Wäschersumpf abgeschieden wird. Aus dem Wäschersumpf wird Ammoniumsulfatlösung wieder entnommen und in den Rauchgasstrom als Quenchflüssigkeit eingesprüht. Durch Wasserverdampfung wird die Ammoniumsulfatlösung aufkonzentriert. Durch Regelung eines Zuflusses von Ammoniumsulfatlösung, die aus der Oxidationsvorrichtung entnommen wird, und Abzuges eines Teilstromes konzentrierter Ammoniumsulfatlösung aus dem Wäschersumpf kann die $(NH_4)_2SO_4$-Konzentration im Wäschersumpf eingestellt werden. Auf diese Weise ist es möglich, Ammoniumsulfatlösungen bis zu einer Konzentration von etwa 42 Gew.-% zu erhalten. Bei noch höheren Konzentrationen tritt eine störende Kristallisation ein. Es wurde festgestellt, daß die sich bei hohen Konzentrationen bildenden $(NH_4)_2SO_4$-Kristalle im Wäscher nicht absorbiert werden und Aerosole bilden, die nur unter Einsatz aufwendiger Filteranlagen abgeschieden werden können. Zumindest ein Teil der konzentrierten Ammoniumsulfatlösung, die aus dem Wäschersumpf abgezogen wird, ist Ammoniumsulfatgewinnungsanlagen zuführbar und wird zu Düngemitteln weiterverarbeitet.

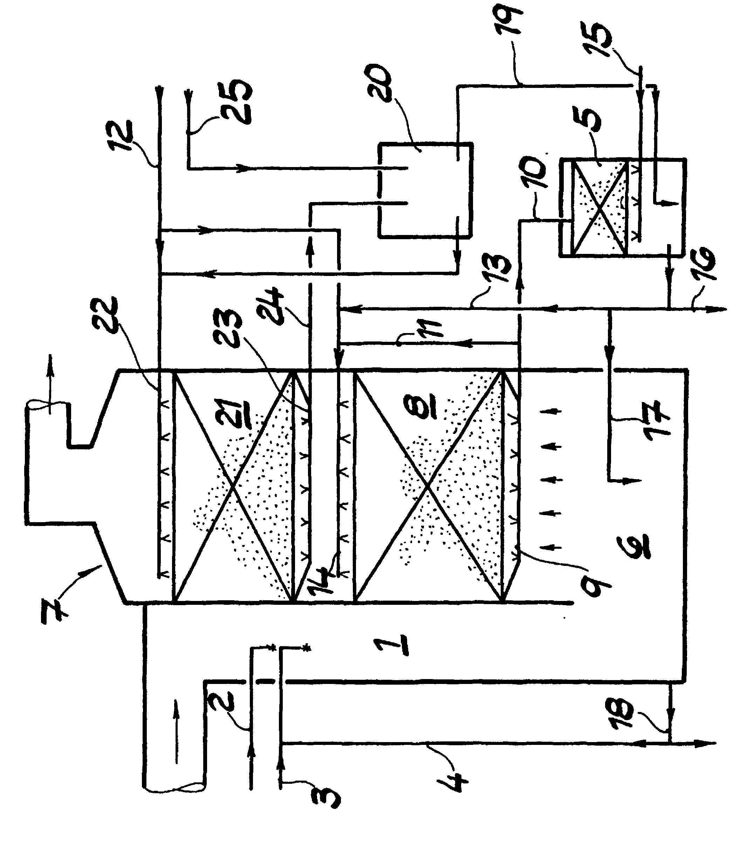

Im folgenden wird die Erfindung anhand einer lediglich ein Ausführungsbeispiel darstellenden Zeichnung erläutert. Die einzige Figur zeigt das Schema einer Anlage zur Durchführung des erfindungsgemäßen Verfahrens.

Das der Anlage zugeführte Rauchgas wird in einer Quenchstrecke 1 im Gleichstrom mit einer Na0H- oder KOH-Lösung, die über eine Leitung 2 zugeführt wird, berieselt, um etwaige vorhandene Halogenwasserstoffe abzuscheiden. Ferner wird dem Rauchgas über eine Zuführeinrichtung 3 Wasser und/oder über eine Leitung 4 Ammoniumsulfatlösung gekühlt und mit Wasserdampf gesättigt. Die Flüssigkeitstemperatur wird in einem Bereich zwischen 45 und 60° C gehalten, wobei die Sättigungstemperatur des Gases die Temperatur der Quenchflüssigkeit bestimmt. Vorzugsweise wird als Quenchflüssigkeit Ammoniumsulfatlösung eingesetzt, die mit einer Konzentration von 25 bis 30 Gew.-% aus einer Oxidationsvorrichtung 5 abgezogen und dem Sumpf 6 eines Wäschers 7 zugeführt wird.

Das gekühlte, mit Wasserdampf gesättigte und halogenwasserstofffreie Rauchgas strömt anschließend in die Waschzone 8 des Wäschers 7. In der Waschzone 8 wird das im wesentlichen mit $SO_2$ beladene Rauchgas mit einer Absorptionsflüssigkeit in Kontakt gebracht, die erfindungsgemäß aus einem Gemisch aus Ammoniakwasser, wässriger Ammoniumsulfatlösung und frisch gebildeter Ammoniumsulfitlösung besteht. Ein Teilstrom der auf einem gasdurchlässigen Boden 9 unterhalb der Waschzone 8 abgezogenen Absorptionsflüssigkeit wird über die Leitung 10 der Oxidationsvorrichtung zugeführt. Dort erfolgt durch Zugabe eines sauerstoffhaltigen Gases eine Oxidation der in der Flüssigkeit vorhandenen Ammoniumsulfite und Ammoniumhydrogensulfite zu Ammoniumsulfat. Der andere Teil der Absoroptionsflüssigkeit wird über die Leitung 11 im Kreis geführt, mit Ammoniakwasser aus der Leitung 12 sowie der über die Leitung 13 zugeführten Ammoniumsulfatlösung aus der Oxidationsvorrichtung 5 vermischt und der Berieselungsanlage 14 oberhalb der Waschzone 8 zugeführt.

Die Waschzone 8 enthält eine Füllkörperschüttung, welche die Kontaktoberfläche zwischen Rauchgas und Absorptionsflüssigkeit vergrößert und die $SO_2$-Absorption verbessert. Durch den Einsatz von Füllkörpern ist es möglich, die Höhe der Waschzone 8 und damit die Bauhöhe des Wäschers 7 insgesamt zu verringern. In der Füllkörperschüttung sind handelsübliche Füllkörper einsetzbar, die aus einem gegenüber sauren Gasen inerten Material besteht.

Um eine effektive Absorption von $SO_2$ zu erreichen, wird der pH-Wert der Absorptionsflüssigkeit aufgabeseitig zwischen pH 5 und pH 6,5 eingestellt. Die pH-Einstellung erfolgt über die Zuführung von Ammoniakwasser.

An die Oxidationsvorrichtung ist eine Luftleitung 15 mit Gebläse angeschlossen. Die über die Leitung 15 zugeführte Luft wird intensiv mit der $NH_4HSO_3$/$(NH_4)_2SO_3$ enthaltenen Flüssigkeit in Kontakt gebracht. Die anfallende Ammoniumsulfatlösung wird im Sumpf der Oxidationsvorrichtung 5 gesammelt. Die Ammoniumsulfatkonzentration wird z. B. durch Dichtemessung bestimmt. Mit einer Ammoniumsulfatkonzentration von 25 bis 30 Gew.-% wird die Ammoniumsulfatlösung aus dem Sumpf der Oxidationsvorrichtung 5 abgezogen. Der über die Leitung 16 abgezogene Teilstrom ist einer Ammoniumsulfatgewinnungsanlage zuführbar, in der durch Entfernen des Wassers reines Ammoniumsulfat hergestellt wird. Ein über die Leitung 17 abgezogener Teilstrom wird dem Wäschersumpf zugeführt und in einem an den Wäschersumpf angeschlossenen Flüssigkeitskreislauf 18 als Quenchflüssigkeit zum Kühlen des Rauchgases verwendet, wobei eine Aufkonzentrierung der Ammoniumsulfatlösung auf Ammoniumsulfatkonzentrationen bis zu 42 Gew.-% erfolgt.

Die Flüssigkeitsmenge im Sumpf der Oxidationsvorrichtung 5 ist über eine entsprechende Zuleitung durch Zufuhr von Wasser oder Waschflüssigkeit aus einem Pufferbehälter 20 konstant einstellbar.

In dem in der Figur dargestellten Ausführungsbeispiel enthält der Wäscher 7 eine zweite Waschzone 21, ebenfalls mit einer Füllkörperschüttung. Eine Waschlösung wird mit einem pH-Wert zwischen pH 4 und pH 6 über einen Flüssigkeitsverteiler 22 auf die Schüttung der zweiten Waschzone 21 aufgegeben und mit dem gereinigten Gas in Kontakt gebracht. Im Rahmen der Erfindung liegt es, daß das von sauren Komponenten befreite Rauchgas durch eine nicht dargestellte Aerosolabscheidevorrichtung geleitet wird, obwohl vorzugsweise auf eine derartige Filteranlage verzichtet wird. Als Aerosolabscheidevorrichtung kann ein oberhalb der zweiten Waschzone angeordnetes Naßelektrofilter verwendet werden.

Die beladene Waschflüssigkeit der zweiten Waschzone wird auf einem unterhalb der zweiten Waschzone 21 angeordneten Flüssigkeitssammelboden 23 abgezogen und über eine Leitung 24 in den Pufferbehälter geleitet. Der pH-Wert der Waschflüssigkeit wird durch Zufuhr von Ammoniakwasser über die Leitung 12 eingestellt. Der Flüssigkeitsstand im Sumpf des Pufferbehälters 20 wird über die Zufuhr von Wasser über die Leitung 25 geregelt.

Das gereinigte Rauchgas wird anschließend zum Kamin geführt und an die Umgebung abgegeben.

**Patentansprüche**

1.  Verfahren zur Entfernung von Schwefeldioxid aus Rauchgasen, insbesondere aus Kraftwerksabgasen und Abgasen aus Müllverbrennungsanlagen, bei dem

    das Rauchgas von unten nach oben durch einen Wäscher mit mindestens einer Waschzone geleitet und im Gegenstrom mit Absorptionsflüssigkeit beaufschlagt wird, die an der Oberseite der Waschzone aufgegeben sowie unterhalb der Waschzone aus dem Wäscher abgezogen wird, und

    die Absorptionsflüssigkeit in einem Waschflüssigkeitskreislauf zur Oberseite der Waschzone zurückgeführt wird,

    wobei dem Waschflüssigkeitskreislauf Ammoniakwasser zugeführt und aus dem Waschflüssigkeitskreislauf ein Flüssigkeitsstrom abgezweigt sowie eine Oxidationsvorrichtung zugeführt wird, in der in der Flüssigkeit vorhandenes Ammoniumsulfit ($(NH_4)_2SO_3$) und Ammoniumhydrogensulfit ($NH_4HSO_3$) zu Ammoniumsulfat ($(NH_4)_2SO_4$) oxidiert werden, **dadurch gekennzeichnet, daß** die an der Oberseite der Waschzone aufgegebene Absorptionsflüssigkeit aus einer Mischung aus

    a) Ammoniakwasser,

    b) ammoniumsulfithaltiger Waschflüssigkeit, die unterhalb der Waschzone aus dem Wäscher abgezogen und ohne Zwischenbehandlung zurückgeführt wird, und

    c) Ammoniumsulfatlösung, die aus der Oxidationsvorrichtung zurückgeführt wird,

    besteht, wobei ein Mischungsverhältnis zwischen Ammoniumsulfit und Ammoniumsulfat von 15 : 1 bis 3 : 1 eingestellt wird.

2.  Verfahren nach Anspruch 1, **dadurch gekennzeichnet, daß** das Mischungsverhältnis zwischen Ammoniumsulfit und Ammoniumsulfat in der Absorptionslösung im Bereich zwischen 10 : 1 und 5 : 1 eingestellt wird.

3.  Verfahren nach einem der Ansprüche 1 oder 2, **dadurch gekennzeichnet, daß** der pH-Wert der Absorptionsflüssigkeit aufgabeseitig zwischen pH 5 und pH 6,5 eingestellt wird, wobei die Einstellung des pH-Wertes über die Zuführung von Ammoniakwasser erfolgt.

4.  Verfahren nach einem der Ansprüche 1 bis 3, **dadurch gekennzeichnet, daß** der Mengenstrom der unter Umgehung der Oxidationsstufe direkt zur Waschzone zurückgeführten ammoniumsulfithaltigen Waschflüssigkeit so eingestellt wird, daß die auf die Waschzone aufgegebene Absorptionsflüssigkeit eine überstöchimetrische Menge an Ammoniumsulfit entsprechend der Reaktionsgleichung

    $$(NH_4)_2SO_3 + SO_2 + H_2O \rightarrow 2NH_4HSO_3$$

    für die Bindung der mit dem Rauchgas der Waschzone zugeführten $SO_2$-Menge enthält.

5.  Verfahren nach einem der Ansprüche 1 bis 4, **dadurch gekennzeichnet, daß** der Wäscher in der Waschzone eine Füllkörperschüttung enthält, die oberseitig von der Absorptionsflüssigkeit berieselt wird, wobei die Aufgabemenge der Absorptionsflüssigkeit nach Maßgabe eines für die Füllkörperschüttung empirischen Wertes festgelegt wird, und daß der Mengenstrom der aus der Oxidationsvorrichtung zur Waschzone zurückgeführten Ammoniumsulfatlösung nach Maßgabe der vorgegebenen Aufgabemenge eingestellt wird.

6.  Verfahren nach einem der Ansprüche 1 bis 5, **dadurch gekennzeichnet, daß** die Ammoniumsulfatlösung mit einer Ammoniumsulfatkonzentration von 25 Gew.-% bis 30 Gew.-% aus der Oxidationsvorrichtung abgezogen wird.

7.  Verfahren nach einem der Ansprüche 1 bis 6, **dadurch gekennzeichnet, daß** das Rauchgas vor Eintritt in die Waschzone durch Einsprühen von Quenchwasser und/oder Ammoniumsulfatlösung gekühlt und mit Wasser gesättigt wird.

8.  Verfahren nach Anspruch 7, **dadurch gekennzeichnet, daß** die Absorptionsflüssigkeit auf einem gasdurchlässigen Boden unterhalb der Waschzone aus dem Wäscher abgezogen wird und daß die zum Quenchen eingesetzte Ammoniumsulfatlösung im Wäschersumpf abgeschieden wird, wobei aus dem Wäschersumpf Ammoniumsulfatlösung wieder entnommen und in den Rauchgasstrom als Quenchflüssigkeit eingesprüht wird und wobei im Wäschersumpf eine Ammoniumsulfatkonzentration von maximal 42 Gew.-% eingestellt wird.

**Claims**

1.  A method for removal of sulfur dioxide from fumes, in particular from motor vehicle exhaust and exhaust from refuse incinerators, in which the fumes are conveyed from below to above by means of a wash column and is impacted in counterflow with absorption fluid, which is delivered on the upper side of a washing zone and is removed beneath the washing zone from the wash column, and

the absorption liquid is lead back to the upper side of the washing zone into a wash fluid circuit, whereby the washing fluid circuit supplied ammonia water and a fluid current branches off from the washing fluid circuit and an oxidation device is supplied, in which ammonium sulfite ($(NH_4)_2SO_3$) and ammonium hydrogen sulfite ($NH_4HSO_3$) is oxidized to ammonium sulfate ($(NH_4)_2SO_4$), **characterized in that** the absorption fluid supplied to the upper side of the washing zone is made of a mixture of

a) ammonia water,

b) ammonium sulfite-containing washing fluid, which beneath is removed beneath the washing zone from the washing column and is lead back without intermediary treatment, and

c) ammonium sulfate solution, which is lead back from the oxidation device,

whereby a mixture ratio between ammonium sulfite and ammonium sulfate of 15:1 to 3:1 is set.

2. The method according to claim 1, **characterized in that** the mixture ratio between ammonium sulfite and ammonium sulfate in the absorption solution in the range between 10:1 and 5:1 is set.

3. The method according to one of claims 1 or 2, **characterized in that** the pH value of the absorption fluid on an infeed side is set between pH 5 and pH 6.5, whereby the adjustment of the pH value takes place via the supply of ammonia water.

4. The method according to one of claims 1 to 3, **characterized in that** a mass flow of the ammonium sulfite-containing fluid directly lead back to the washing zone, with bypass of the oxidation stage, is set so that the absorption fluid supplied to the washing zone contains an over-stoichiometric amount of ammonium sulfite corresponding to the reaction equation

$$(NH_4)_2SO_3 + SO_2 + H_2O \rightarrow 2NH_4HSO_3$$

for the bond of the $SO_2$ volume supplied with the fumes to the washing zone.

5. The method according to one of claims 1 to 4, **characterized in that** the washing column in the washing zone contains filling material, which on is tricked over on a top side by the absorption fluid, whereby the output volume of the absorption fluid is determined according to proportions of a empirical value for the filling material, and that the mass flow of the ammonium sulfate solution lead back from the oxidation device to the washing zone is set according to proportions of the specified output volume.

6. The method according to one of claims 1 to 5, **characterized in that** the ammonium sulfate solution with an ammonium sulfate concentration of 25 % by weight to 30 % by weight is removed from the oxidation device.

7. The method according to one of claims 1 to 6, **characterized in that** the fumes, before entering into the washing zone, are cooled by spraying of quenching water and/or ammonium sulfate solution and saturated with water.

8. The method according to claim 7, **characterized in that** the absorption fluid on a gas-permeable floor beneath the washing zone is removed from the washing column and that the ammonium sulfate solution introduced to quenching is isolated in a washer sump, whereby ammonium sulfate solution is again removed from the washer sump and is sprayed into the fume current as a quenching fluid and whereby in the washing sump, an ammonium sulfate concentration of 42 % by weight maximum is used.

**Revendications**

1. Procédé destiné à l'élimination du dioxyde de soufre dans des gaz de fumée, notamment des gaz d'échappement dégagés par des usines de production d'électricité et des usines d'incinération des déchets, dans lequel

le gaz de fumée est conduit du bas vers le haut à travers un laveur avec au moins une zone de lavage et sollicité à contrecourant avec un liquide d'absorption qui arrive dans la partie supérieure de la zone de lavage et est évacué du laveur en dessous de la zone de lavage, et

le liquide d'absorption est ramené vers la partie supérieure de la zone de lavage dans un circuit pour liquide de lavage,

de l'eau ammoniacale étant introduite dans le circuit pour liquide de lavage, un flux de liquide étant dérivé du circuit pour liquide de lavage et amené à un dispositif d'oxydation dans lequel du sulfite d'ammonium ($(NH_4)_2SO_3$) et de l'hydrogénosulfite d'ammonium ($NH_4HSO_3$) présents dans le liquide sont transformés en sulfate d'ammonium ($(NH_4)_2SO_4$) par oxydation, **caractérisé en ce que** le liquide d'absorption arrivant dans la partie supérieure de la zone de lavage est un mélange

 a) d'eau ammoniacale

 b) de liquide de lavage contenant du sulfite d'ammonium, lequel est évacué du laveur en dessous de la zone de lavage et réintroduit dans le circuit sans traitement intermédiaire, et

 c) de sulfate d'ammonium en solution qui est ramené du dispositif d'oxydation,

le rapport de mélange entre le sulfite d'ammonium et le sulfate d'ammonium étant ajusté dans une plage de 15 : 1 à 3 : 1.

2. Procédé selon la revendication 1 **caractérisé en ce que** le rapport de mélange entre le sulfite d'ammonium et le sulfate d'ammonium dans la solution d'absorption est ajusté dans une plage de 10 : 1 à 5 : 1.

3. Procédé selon l'une des revendications 1 ou 2 **caractérisé en ce que** le pH du liquide d'absorption est ajusté entre 5 et 6,5 à la hauteur de l'alimentation, le réglage du pH s'effectuant via l'introduction d'eau ammoniacale.

4. Procédé selon l'une des revendications 1 à 3 **caractérisé en ce que** le flux massique du liquide de lavage contenant du sulfite d'ammonium ramené directement dans la zone de lavage en contournant l'étape d'oxydation est ajusté de sorte que le liquide de lavage chargé dans la zone de lavage contienne une quantité surstoechiométrique de sulfite d'ammonium selon l'équation de réaction

$$(NH_4)_2SO_3 + SO_2 + H_2O \rightarrow 2NH_4HSO_3$$

pour la liaison de la quantité de $SO_2$ amenée dans la zone de lavage avec le gaz de fumée.

5. Procédé selon l'une des revendications 1 à 4 **caractérisé en ce que** le laveur contient dans la zone de lavage un garnissage de colonne dont la partie supérieure est irriguée par pulvérisation avec le liquide d'absorption, la quantité de liquide d'absorption distribuée étant déterminée en fonction d'une valeur empirique pour le garnissage de colonne, et **en ce que** le flux massique de sulfate d'ammonium en solution ramené du dispositif d'oxydation vers la zone de lavage est ajusté en fonction de la quantité distribuée prédéfinie.

6. Procédé selon l'une des revendications 1 à 5 **caractérisé en ce que** la solution de sulfate d'ammonium est décantée du dispositif d'oxydation avec une concentration de sulfate d'ammonium comprise entre 25 % en poids et 30 % en poids.

7. Procédé selon l'une des revendications 1 à 6 **caractérisé en ce que** le gaz de fumée est refroidi par pulvérisation avec de l'eau de refroidissement par injection et/ou du sulfate d'ammonium en solution et saturé en eau avant d'entrer dans la zone de lavage.

8. Procédé selon la revendication 7 **caractérisé en ce que** le liquide d'absorption est décanté hors du laveur en dessous de la zone de lavage sur un fond perméable aux gaz et **en ce que** le sulfate d'ammonium en solution utilisé pour le refroidissement par injection est séparé dans le bac de décantation du laveur où il est récupéré et pulvérisé comme liquide de refroidissement par injection dans le flux de gaz de fumée, une concentration maximale de 42 % en poids étant choisie pour le sulfate d'ammonium dans le bac de décantation.